# EUROPEAN PATENT APPLICATION

(11) **EP 2 372 966 A1**
(43) Date of publication of application: **05.10.2011**
(21) Application number: 09832879.2
(22) Date of filing: 14.10.2009
(51) Int. Cl.: H04L 29/06

(54) **METHOD AND DEVICE OF MULTIMEDIA SUBSYSTEM SERVICE DISPOSAL AND MULTIMEDIA SUBSYSTEM**

(30) Priority: 17.12.2008 CN 200810186117
(71) Applicant: Huawei Technologies Co., Ltd., Shenzhen, Guangdong 518129 (CN)
(72) Inventor: QIAN, Sihua, Shenzhen Guangdong 518129 (CN); SHU, Xuzu, Shenzhen Guangdong 518129 (CN); LIANG, Feng, Shenzhen Guangdong 518129 (CN)
(74) Representative: Pfenning, Meinig & Partner GbR
(86) International application number: PCT/CN2009/074443
(87) International publication number: WO 2010/069197

(57) **Abstract**

The present invention relates to the network communication field and discloses a method and an apparatus for processing IP multimedia subsystem (IMS) services and an IMS. The method for processing IMS services includes: receiving a service request of a user forwarded by a proxy call session control function (P-CSCF); requesting a home subscriber server (HSS) to query for whether the user is already registered; when the HSS finds that the user is already registered, receiving a successful response and information of a serving call session control function (S-CSCF) allocated to the user; and forwarding the service request to the S-CSCF for serving the user. The IMS includes a P-CSCF, an interrogating call session control function (I-CSCF), an S-CSCF, and an HSS. In the present invention, when the P-CSCF loses the registration information of the user, the HSS is configured to query for whether the user is already registered and obtain the information of the S-CSCF. In this way, the registered user may perform session services without re-registration, thus improving the service experience.

## Description

This application claims priority to Chinese Patent Application No. 200810186117.8, filed with the Chinese Patent Office on December 17, 2008 and entitled "METHOD FOR PROCESSING IP MULTIMEDIA SUBSYSTEM SERVICES, P-CSCF, I-CSCF AND IP MULTIMEDIA SUBSYSTEM", which is incorporated herein by reference in its entirety.

### FIELD OF THE INVENTION

The present invention relates to the field of network communication technologies, and in particular, to a method and an apparatus for processing IP multimedia subsystem (IMS) services, and an IMS.

### BACKGROUND OF THE INVENTION

With the rapid popularity of broadband, multimedia communication on an Internet Protocol (IP) packet network becomes a common requirement of people. To satisfy the requirement, the 3rd Generation Partnership Project (3GPP) proposes an IMS (IP Multimedia Subsystem).

In an IMS, a proxy call session control function (P-CSCF) is a unified ingress of the IMS, and provides proxy functions such as receiving registration and multimedia session requests from a user, and forwarding the user requests to a home serving call session control function (S-CSCF) serving the user, so that the S-CSCF serves the user, or forwarding the user requests to a home interrogating call session control function (I-CSCF) serving the user to perform query operations.

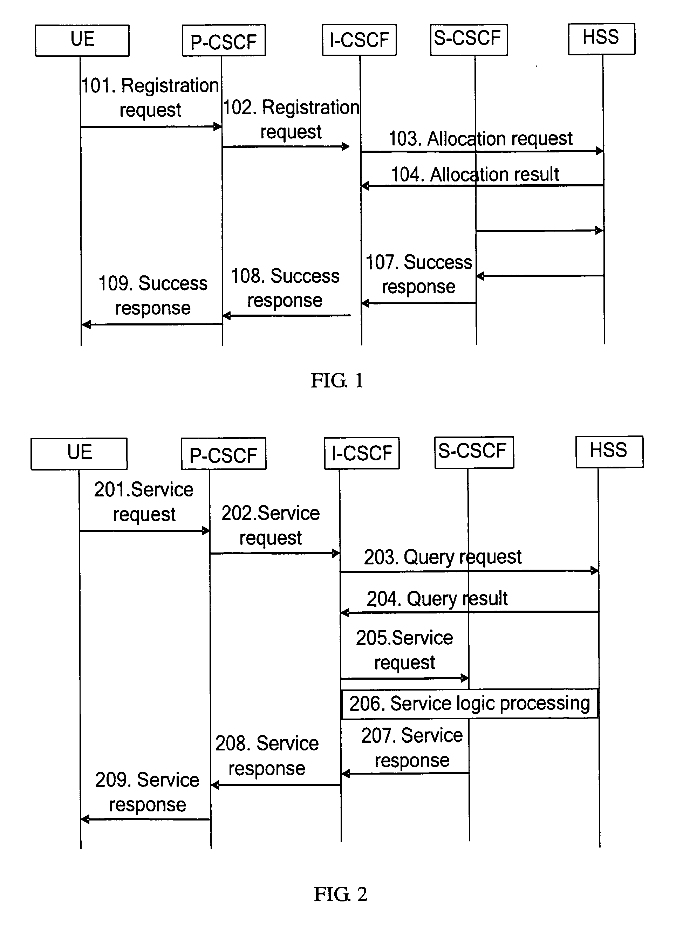

In the IMS, to carry out session services, users need to register their locations with the network. FIG. 1 illustrates a user registration process. After a user completes registration, the P-CSCF stores a connection address of the user, and through this address, the service request is forwarded to the user when the user carries out a service as a called party. In addition, the P-CSCF stores an association between the user and the S-CSCF serving the user, and through this association, the service request is forwarded to the S-CSCF when the user carries out a service as a calling party.

In a scenario where a P-CSCF is deployed in an IMS, in a registration period, when the P-CSCF is restarted in the case of faults, the user registration information stored on the P-CSCF is lost. In this case, if the user sends a service request, the P-CSCF may reject the service request of the user because no registration information of the user is available on the P-CSCF. In a scenario where multiple P-CSCFs are deployed for disaster recovery, when a P-CSCF with which the user is registered is faulty and another P-CSCF begins to serve the user, the user is required to re-initiate a registration procedure to initiate a service request normally.

In practical applications, the re-registration of the user is automatically initiated by a user equipment (UE) on a periodic basis. Therefore, the registration request cannot be initiated automatically when the P-CSCF is changed or the service fails, and re-registration needs to be performed manually, which causes a great inconvenience to the user.

### SUMMARY OF THE INVENTION

To improve the user experience of an IMS, embodiments of the present invention provide a method and an apparatus for processing IMS services and an IMS.

An embodiment of the present invention provides a method for processing IMS services, including:
receiving a service request of a user forwarded by a P-CSCF, where the service request includes a user identity (ID);
sending the user ID to a home subscriber server (HSS), requesting the HSS to query for whether the user is already registered;
if the HSS finds that the user is already registered, receiving from the HSS a successful response and information of an S-CSCF allocated to the user; and
forwarding the service request to the S-CSCF according to the information of the S-CSCF.

An embodiment of the present invention provides a P-CSCF, including:
a first receiving module, configured to receive a service request sent from a user, where the service request includes a user ID;
a first querying module, configured to: query a local database for registration information of the user according to the service request; if failing to find the registration information of the user, query for a home I-CSCF serving the user according to the user ID in the service request; and
a first forwarding module, configured to forward the service request to the I-CSCF found by the first querying module when the first querying module fails to find the registration information of the user.

An embodiment of the present invention provides an I-CSCF, including:
a first receiving module, configured to receive a service request of a user forwarded by a P-CSCF, where the service request includes a user ID;
a first sending module, configured to send the user ID to an HSS, requesting the HSS to query for whether the user is already registered;
a second receiving module, configured to receive from the HSS a successful response and information of an S-CSCF allocated to the user, when the HSS finds that the user is already registered; and
a second sending module, configured to forward the service request to the S-CSCF according to the information of the S-CSCF.

An embodiment of the present invention provides an IMS, including:
a P-CSCF, configured to forward the service request to a home I-CSCF serving a user after receiving a service request that includes a user ID;
the I-CSCF, configured to: receive the service request of the user forwarded by the P-CSCF; send the user ID to an HSS; when the HSS finds that the user is already registered, receive from the HSS a successful response and information of an S-CSCF allocated to the user; and forward the service request to the S-CSCF according to the information of the S-CSCF;
the S-CSCF, configured to: receive the service request forwarded by the I-CSCF, and serve the user according to the service request; and
the HSS, configured to: query for whether the user is already registered according to the user ID sent from the I-CSCF; if the user is already registered, return the successful response and information of the S-CSCF allocated to the user to the I-CSCF.

### BRIEF DESCRIPTION OF THE DRAWINGS

To make the technical solution in the present invention or in the prior art clearer, the accompanying drawings illustrating the embodiments of the present invention or the prior art are outlined below. Apparently, the accompanying drawings are exemplary only, and those skilled in the art can derive other drawings from such accompanying drawings without creative efforts.
FIG. 1 is a flowchart of a user registration process in an IMS in the prior art;
FIG. 2 is a flowchart of a method for processing IMS services according to a first embodiment of the present invention;
FIG. 3 is a flowchart of the method for processing IMS services according to the first embodiment of the present invention;
FIG. 4 is a structural diagram of a P-CSCF according to a second embodiment of the present invention;
FIG 5 is a structural diagram of the P-CSCF according to the second embodiment of the present invention;
FIG. 6 is a structural diagram of an I-CSCF according to the second embodiment of the present invention;
FIG. 7 is a structural diagram of the I-CSCF according to the second embodiment of the present invention; and
FIG. 8 is a structural diagram of an IMS according to a third embodiment of the present invention.

### DETAILED DESCRIPTION OF THE ENBODIMENTS

In order to make the objectives, technical solution and merits of the present invention clearer, the embodiments of the present invention are described hereinafter in detail with reference to the accompanying drawings. Evidently, the embodiments are only exemplary embodiments of the present invention and the invention is not limited to such embodiments. Other embodiments that those skilled in the art derive from embodiments of the present invention also fall within the protection scope of the present invention. The sequence numbers of the following embodiments are used for better description only, and do not indicate the order of preference.

### Embodiment 1

An embodiment of the present invention provides a method for processing IMS services. Within the valid time after a user is registered, if a P-CSCF is restarted, the P-CSCF queries the HSS for whether the user is already registered and the S-CSCF allocated to the user, so that the registered user may carry out services normally without re-registration.

In this embodiment, after the user is already registered successfully, the P-CSCF is restarted within the registration period, and the information related to user registration on the P-CSCF is lost. To enable the user to carry out services normally and reduce the service interruption time, the embodiment of the present invention provides a solution. As shown in FIG 2, the process of carrying out a service by a calling user when the P-CSCF serving the calling user is faulty includes the following steps:
Step 201: A user sends a service request to a P-CSCF through a UE. It should be noted that the service request initiated by the user in the IMS includes a user ID. The service request may be Invite or Message.
Step 202: The P-CSCF receives the service request of the user, and locally queries for the registration information of the user according to the service request. In this scenario, because the P-CSCF is restarted after the user is registered, the P-CSCF does not find the registration information of the user. The P-CSCF queries for the home I-CSCF serving the user through the domain name server (DNS) or local configurations according to the user ID in the service request, and forwards the service request to the I-CSCF.

Optionally, to improve the security, the I-CSCF may judge whether the service request comes from a preset trusted domain according to the user ID in the service request after receiving the service request, where the trusted domain may be preset in the IMS. The IMS believes that all the service requests from the trusted domain are trustable by default. If the I-CSCF judges that the service request comes from a trusted domain, the process proceeds to step 203; if the I-CSCF judges that the service request does not come from a trusted domain, the I-CSCF rejects the service request of the user, and the process ends.

Step 203: The I-CSCF sends the user ID to an HSS to initiate a request, requesting the HSS to query for whether the user is already registered.

Step 204: The HSS queries for, according to the user ID, whether the user is already registered; if the user is already registered, the HSS returns a successful response and information of the S-CSCF allocated to the user during user registration to the I-CSCF, and the process proceeds to step 205. If the user is not registered yet, the HSS returns a negative response to the I-CSCF; after receiving the negative response, the I-CSCF rejects the service request of the user, and the process ends.

Step 205: The I-CSCF forwards the service request to the S-CSCF allocated to the user.

Step 206: The S-CSCF performs service logic processing according to the service request of the user, and provides the user with corresponding services. Specifically, the S-CSCF sends the service request of the user to the S-CSCF serving the called user according to the called user address in the service request of the user.

Steps 207-209: After completing the calling service and providing the user with services, the S-CSCF sends a service response to the I-CSCF. The I-CSCF sends the service response to the P-CSCF. After receiving the service response, the P-CSCF stores an association between the user and the S-CSCF serving the user. After the association is established, when the user re-initiates a calling service request, the P-CSCF directly forwards the service request to the S-CSCF for corresponding service processing according to the association.

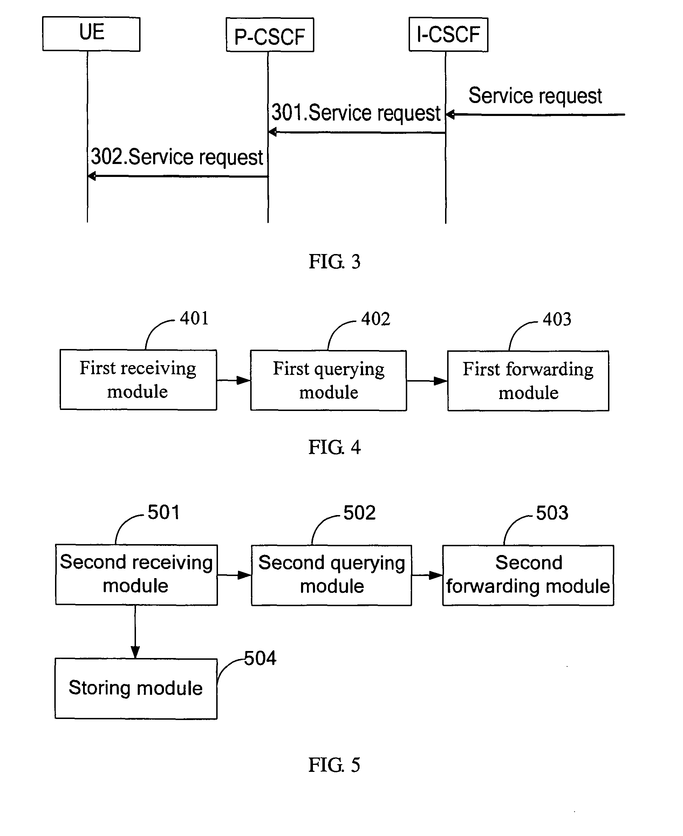

As shown in FIG. 3, after the P-CSCF serving the called user is restarted due to faults, the process of carrying out a service as a called party by the called user includes the following steps:
Step 301: After receiving a called-service request, the S-CSCF forwards the called-service request to the P-CSCF serving the called user.
Step 302: After receiving the called-service request, the P-CSCF serving the called user locally queries for the registration information of the called user. In this scenario, because the P-CSCF is restarted, the P-CSCF fails to find the registration information of the called user. The P-CSCF forwards the called-service request to the UE serving the called user according to the called user address in the called-service request.

After receiving the called-service request, the UE sends a service success message to the P-CSCF if the UE serving the called user processes the service successfully. After receiving the service success message, the P-CSCF stores the association between the called user and the S-CSCF serving the called user. In this case, the association is re-established.

In this embodiment, when the P-CSCF loses the registration information of the user, the HSS is configured to query for whether the user is already registered and obtain the information of the S-CSCF serving the user. In this way, when the P-CSCF loses the registration information of the user, the registered user may perform session services without re-registration, which improves the service experience of the user.

### Embodiment 2

This embodiment provides a P-CSCF. As shown in FIG. 4, if the P-CSCF is restarted within the valid time after a user is registered, the user registration-related information stored on the P-CSCF is lost. To enable the user to carry out the service normally, the P-CSCF includes the following modules when originating a service:
a first receiving module 401, configured to receive a service request sent from a user, where the service request includes a user ID;
a first querying module 402, configured to query a local database for registration information of the user according to the service request; if failing to find the registration information of the user, query for the home I-CSCF serving the user according to the user ID in the service request; and
a first forwarding module 403, configured to forward the service request to the I-CSCF found by the first querying module 402 when the first querying module 402 fails to find the registration information of the user.

As shown in FIG. 5, the P-CSCF includes the following modules when carrying out a service as a called party:
a second receiving module 501, configured to receive a called-service request;
a second querying module 502, configured to query the local database for the registration information of the called user according to the called-service request; and
a second forwarding module 503, configured to send the called-service request directly according to the called user address in the called-service request when the second querying module fails to find the registration information of the called user.

Further, after the S-CSCF in the system completes the service origination and provides the user with services, the S-CSCF sends a service response to the I-CSCF, and the I-CSCF sends the service response to the P-CSCF. After receiving the service response, the P-CSCF stores an association between the user and the S-CSCF serving the user, so that the P-CSCF directly forwards the service request to the S-CSCF for corresponding service processing when the user re-initiates a calling service request. In this case, the P-CSCF further includes:
a storing module 504, configured to store an association between the user and the S-CSCF after receiving the successful response and the information of the S-CSCF allocated to the user from the I-CSCF.

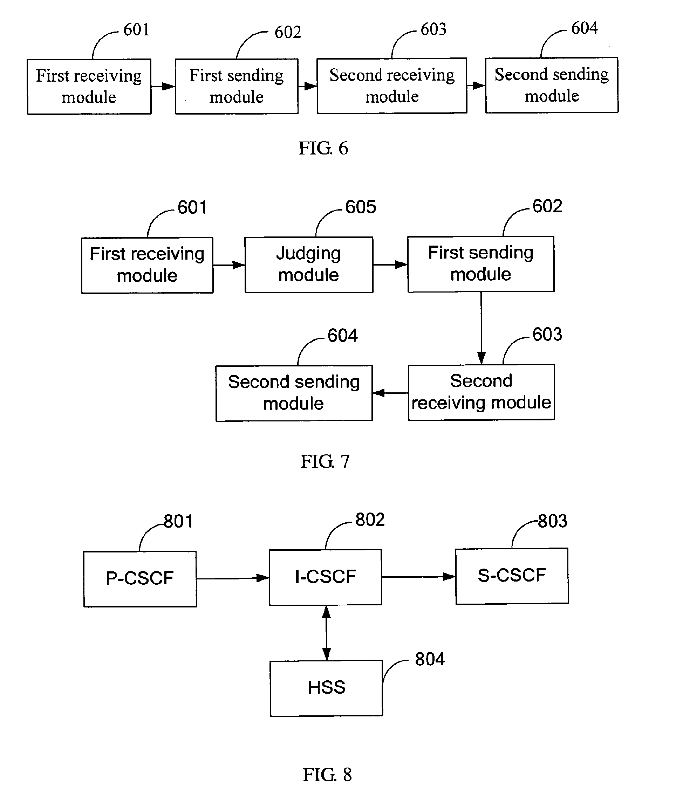

In this embodiment, the I-CSCF queries the HSS for whether the user is already registered and the S-CSCF allocated to the user, so that the registered user may carry out services normally without re-registration. As shown in FIG. 6, the I-CSCF provided in this embodiment includes:
a first receiving module 601, configured to receive a service request of the user forwarded by the P-CSCF, where the service request includes a user ID;
a first sending module 602, configured to send the user ID to the HSS, requesting the HSS to query for whether the user is already registered;
a second receiving module 603, configured to receive from the HSS a successful response and information of the S-CSCF allocated to the user when the HSS finds that the user is already registered; and
a second sending module 604, configured to forward the service request to the S-CSCF according to the information of the S-CSCF, so that the S-CSCF serves the user according to the service request of the user.

To improve the security, the I-CSCF may judge whether the user comes from a trusted domain after receiving the service request of the user. In this case, as shown in FIG. 7, the I-CSCF further includes:
a judging module 605, configured to judge, according to the user ID in the service request, whether the service request comes from a preset trusted domain; and
the first sending module 602, further configured to: when the judging module 605 judges that the service request comes from the preset trusted domain, send the user ID to the HSS, and request the HSS to query for whether the user is already registered.

In this embodiment, when the P-CSCF loses the registration information of the user, the I-CSCF queries the HSS for whether the user is already registered, and obtains the information of the S-CSCF serving the user. In this way, when the P-CSCF loses the registration information of the user, the registered user may perform session services without re-registration, which improves the service experience of the user.

### Embodiment 3

The third embodiment of the present invention provides an IMS. Within the valid time after the user is registered, if the P-CSCF is restarted, the I-CSCF queries the HSS for whether the user is already registered and the S-CSCF allocated to the user, so that the registered user may carry out services normally without re-registration. As shown in FIG. 8, the system includes:
a P-CSCF 801, configured to forward the service request to a home I-CSCF 802 serving the user after receiving a service request of the user;
the I-CSCF 802, configured to: receive the service request of the user forwarded by the P-CSCF; send the user ID to an HSS 804; when the HSS 804 finds that the user is already registered, receive from the HSS a successful response and information of an S-CSCF 803 allocated to the user; and forward the service request to the S-CSCF 803 according to the information of the S-CSCF 803;
the S-CSCF 803, configured to: receive the service request forwarded by the I-CSCF 802, and serve the user according to the service request; and
the HSS 804, configured to: query for whether the user is already registered according to the user ID sent from the I-CSCF 802; if the user is already registered, return the successful response and information of the S-CSCF 803 allocated to the user to the I-CSCF 802.

To improve the security, the I-CSCF 802 may judge whether the user comes from a trusted domain after receiving the service request of the user. In this case, the I-CSCF 802 is further configured to: judge whether the service request comes from the trusted domain according to the user ID in the service request; if the service request comes from the trusted domain, send the user ID to the HSS 804.

When the user carries out a service as a calling party, the P-CSCF 801 is configured to: after receiving a service request from the user, query the local database for registration information of the user according to the service request; if failing to find the registration information of the user, find the home I-CSCF 802 serving the user according to the user ID in the service request, and forward the service request to the I-CSCF 802.

Further, to ensure that the user can directly establish a connection with the S-CSCF 803 when the user carries out a service as a calling party again, the P-CSCF 801 is further configured to store the association between the user and the S-CSCF 803 after receiving the successful response and the information of the S-CSCF 803.

When the user carries out a service as a called party, the P-CSCF 801 is further configured to: when receiving a service request from the user, query the local database for the registration information of the called user according to the called-service request; if failing to find the registration information of the called user, send the called-service request directly according to the called user address in the called-service request.

In this embodiment, when the P-CSCF loses the registration information of the user, the HSS is configured to query for whether the user is already registered and obtain the information of the S-CSCF serving the user. In this way, when the P-CSCF loses the registration information of the user, the registered user may perform session services without re-registration, which improves the service experience of the user.

It is understandable to those skilled in the art that all or part of the steps in the methods according to the preceding embodiments may be performed by hardware instructed by a program. The program may be stored in a computer readable storage medium, such as a floppy disk, a hard disk, or a compact disk-read only memory (CD-ROM).

Although the present invention has been described through some exemplary embodiments, the invention is not limited to such embodiments. Any modification, equivalent replacement, or improvement to the invention without departing from the spirit and scope of the invention shall fall within the protection scope of the present invention.

## Claims

1. A method for processing IP multimedia subsystem (IMS) services, comprising:
receiving a service request of a user forwarded by a proxy call session control function (P-CSCF), wherein the service request comprises a user identity (ID);
sending the user ID to a home subscriber server (HSS), requesting the HSS to query for whether the user is already registered;
if the HSS finds that the user is already registered, receiving from the HSS a successful response and information of a serving call session control function (S-CSCF) allocated to the user; and
forwarding the service request to the S-CSCF according to the information of the S-CSCF.

2. The method of claim 1, wherein before sending the user ID to the HSS, the method further comprises:
judging whether the service request comes from a trusted domain according to the user ID in the service request; if the service request comes from a trusted domain, sending the user ID to the HSS.

3. The method of claim 1 or 2, wherein before receiving the service request of the user forwarded by the P-CSCF, the method further comprises:
by the P-CSCF, after receiving the service request of the user, querying a local database for registration information of the user according to the service request; if failing to find the registration information of the user, finding a home interrogating call session control function (I-CSCF) serving the user according to the user ID in the service request, and forwarding the service request to the I-CSCF.

4. The method of claim 1 or 2, wherein after forwarding the service request to the S-CSCF according to the information of the S-CSCF, the method further comprises:
forwarding the successful response and the information of the S-CSCF to the P-CSCF; after receiving the successful response and the information of the S-CSCF, storing, by the P-CSCF, an association between the user and the S-CSCF.

5. The method of claim 1 or 2, further comprising:
by the P-CSCF, when receiving a called-service request, querying a local database for registration information of the user according to the called-service request; if failing to find the registration information of the user, sending the called-service request directly according to a called user address in the called-service request.

6. A proxy call session control function (P-CSCF), comprising:
a first receiving module, configured to receive a service request sent from a user, wherein the service request comprises a user identity (ID);
a first querying module, configured to: query a local database for registration information of the user according to the service request; if failing to find the registration information of the user, querying for a home interrogating call session control function (I-CSCF) serving the user according to the user ID in the service request; and
a first forwarding module, configured to forward the service request to the I-CSCF found by the first querying module when the first querying module fails to find the registration information of the user.

7. The P-CSCF of claim 6, further comprising:
a second receiving module, configured to receive a called-service request;
a second querying module, configured to query the local database for registration information of a called user according to the called-service request; and
a second forwarding module, configured to send the called-service request directly according to a called user address in the called-service request when the second querying module fails to find the registration information of the called user.

8. The P-CSCF of claim 6, further comprising:
a storing module, configured to store an association between the user and the S-CSCF after receiving the successful response and the information of the S-CSCF allocated to the user from the I-CSCF.

9. An interrogating call session control function (I-CSCF), comprising:
a first receiving module, configured to receive a service request of a user forwarded by a proxy call session control function (P-CSCF), wherein the service request comprises a user identity (ID);
a first sending module, configured to send the user ID to a home subscriber server (HSS), requesting the HSS to query for whether the user is already registered;
a second receiving module, configured to receive from the HSS a successful response and information of a serving call session control function (S-CSCF) allocated to the user when the HSS finds that the user is already registered; and
a second sending module, configured to forward the service request to the S-CSCF according to the information of the S-CSCF.

10. The I-CSCF of claim 9, further comprising:
a judging module, configured to judge, according to the user ID in the service request, whether the service request comes from a preset trusted domain; and
the first sending module, further configured to: when the judging module judges that the service request comes from the preset trusted domain, send the user ID to the HSS, and request the HSS to query for whether the user is already registered.

11. An IP multimedia subsystem (IMS), comprising:
a proxy call session control function (P-CSCF), configured to forward the service request to a home interrogating call session control function (I-CSCF) after receiving a service request that comprises a user identity (ID) of a user;
the I-CSCF, configured to: receive the service request of the user forwarded by the P-CSCF; send the user ID to a home subscriber server (HSS); when the HSS finds that the user is already registered, receive from the HSS a successful response and information of a serving call session control function (S-CSCF) allocated to the user; and forward the service request to the S-CSCF according to the information of the S-CSCF;
the S-CSCF, configured to: receive the service request forwarded by the I-CSCF, and serve the user according to the service request; and
the HSS, configured to: query for, according to the user ID sent from the I-CSCF, whether the user is already registered; if the user is already registered, return the successful response and information of the S-CSCF allocated to the user to the I-CSCF.

12. The IMS of claim 11, wherein:
the I-CSCF is further configured to: judge, according to the user ID in the service request, whether the service request comes from a trusted domain; if the service request comes from a trusted domain, send the user ID to the HSS.

13. The IMS of claim 11, wherein:
the P-CSCF is configured to: after receiving the service request of the user, query a local database for registration information of the user according to the service request; if failing to find the registration information of the user, find the home I-CSCF serving the user according to the user ID in the service request, and forward the service request to the I-CSCF.

14. The IMS of claim 11, wherein:
the P-CSCF is further configured to store an association between the user and the S-CSCF after receiving the successful response and the information of the S-CSCR

15. The IMS of claim 11, wherein:
the P-CSCF is further configured to: when receiving a called-service request, query a local database for registration information of a called user according to the called-service request; if failing to find the registration information of the called user, send the called-service request directly according to a called user address in the called-service request.
